Europäisches Patentamt

European Patent Office

Office européen des brevets

(19)

(11) Publication number: **0 096 205**

**A1**

(12) **EUROPEAN PATENT APPLICATION**

(21) Application number: **83104027.4**

(22) Date of filing: **25.04.83**

(51) Int. Cl.³: **G 21 C 17/10**
**H 01 B 17/30**

(30) Priority: **11.06.82 US 387402**

(43) Date of publication of application:
**21.12.83 Bulletin 83/51**

(84) Designated Contracting States:
**DE FR GB IT**

(71) Applicant: **COMBUSTION-ENGINEERING, INC.**
**1000 Prospect Hill Road**
**Windsor Connecticut 06095(US)**

(72) Inventor: **Klumb, Ralph Howard**
**37 Evans Drive**
**Simsbury Connecticut 06070(US)**

(72) Inventor: **Bracke, Thomas Paul**
**4 Broadleaf Circle**
**Windsor Connecticut 06095(US)**

(72) Inventor: **Banda, Lionel Alfred Wickboldt**
**43 Oakwood Drive**
**South Windsor Connecticut 06074(US)**

(74) Representative: **Gross, Gernot K.**
**Kleiberweg 5**
**D-6200 Wiesbaden(DE)**

(54) Nuclear containment building penetrator.

(57) The penetration pipe (6) through the wall (1) of a nuclear installation containment building is sealed in a primary seal to a sheet/plate/header (7). The sheet/plate/header (7) is bored for the extension of a mineral insulated electrical instrument line, or cable (5), therethrough. The sheath (18) of the cable (5) is weld-sealed to the sheet/plate/header with the same integrity as the primary seal.

Fig. 1

## NUCLEAR CONTAINMENT BUILDING PENETRATOR

TECHNICAL FIELD

The present invention relates to the safe penetration of a nuclear containment building by electrical instrument lines, or cables, weld or braze-sealed to effective barriers forming a part of the wall of the containment building. More particularly, the invention relates to structure with which the the instrument lines, or cables, penetrate and seal to radioactive barriers under the guidelines of NRC regulations, IEEE documents STD 323 and STD 344, and conform to the specifications of IEEE 317 entitled "The IEEE Standard for Electrical Penetrations in Containment Structures for Nuclear Power Generating Stations".

BACKGROUND ART

Broadly, the wall of a nuclear power installation includes a containment building which consists of a multiple foot thick concrete barrier with an internal metallic liner in the order of 1/2" thickness. Among the necessary penetrations of these walls is that provided for electrical instrument lines, or cables, which must connect primary element instrumentation within the radioactive environment to manifesting and control devices external to the containment building. Necessarily, the penetration includes a shaft, or hole, breaching the concrete and steel of the wall. The first structure within this hole or shaft is a metallic conduit, or pipe, whose external surface is satisfactorily sealed at least to the liner of the containment wall. For purposes of dimensional orientation, this pipe is to be visualized as having a diameter in the order of 18".

It is the conventional arrangement to form a barrier at the internal end of the penetration pipe. However, this arrangement is not exclusive. It is feasible to mount the barrier

C-810810

0096205

structure on the exterior end of the penetration pipe. The structure forming this boundary may be referred to as a pressure plate, tube sheet, or header. The thickness of the structure may vary. It is conventional to have a similar structure at the opposite end of the penetration pipe and the two joined with a cylinder having axial alignment with the penetration pipe. Thus, the combination of the two structures, joined by their cylinder, has the appearance of a hollow-handled dumbbell. With all the instrument cables passed through the tube sheet or header and within the cylinder, additional control is exerted over the seals between the containment barrier and the instrument cable.

A primary seal joins the header to the internal end of the penetration pipe, and the similar structure, located at the opposite end of the penetration pipe, is slidingly supported by the walls of the penetration pipe. With this arrangement, the differential expansion between the different metals of the header structure and the penetration pipe obviates stress on the primary seal between the header structure and the penetration pipe. In the header structure, aligned bores are formed to accommodate instrument cables. It is the sealing of the external sheath of the instrument cables to the sheet/plate/header on the internal end of the penetration pipe that is of present concern.

Current design practice includes a mechanical seal between the external surface of the instrument cable and the sheet/plate/header. Such seals normally include organic elastomeric material within the casing of the cable which is susceptible to temperature and irradiation, is expensive and complicated, and requires periodic maintenance. A seal must be provided which does not employ organic material. Assuming the incorporation of a metallic-enclosed mineral insulated cable, a welded or brazed seal must be provided between the header plate and the cable which will meet the requirements of simplicity, economy, and long life.

DISCLOSURE OF THE INVENTION

The present invention provides a permanent weld or braze-seal between an instrument line, or cable, and a header plate which, in turn, is fastened to the containment wall of a

C-810810

0096205

nuclear reactor installation.

The invention further contemplates an instrument cable with an external metallic sheath extended through a bore in the wall of a containment building for a nuclear installation, and a structure which is welded or brazed between the external surface of the metallic sheath and the wall through which the cable extends.

The invention further contemplates a penetration pipe breaching the containment wall of a nuclear installation and having a primary seal to a sheet/plate/header as a barrier structure. Holes are provided in the sheet/plate/header. A metallic cable containing instrument wiring extends through each hole in the sheet/plate/header, and a fixture about the metallic sheath at the sheet/plate/header is braze or weld-sealed to the surface of the cable and, in turn, braze or weld-sealed to the surface of the sheet/plate/header.

Other objects, advantages and features of this invention will become apparent to one skilled in the art upon consideration of the written specification, appended claims, and attached drawings.

BRIEF DESIGNATION OF THE DRAWINGS

Fig. 1 is a sectioned elevation of a fragment of a wall of a nuclear installation containment building whose wall is penetrated by structure embodying the present invention;

Fig. 2 is a sectioned elevation of a portion of the penetration structure of Fig. 1; and

Fig. 3 is an elevation of the structure of Fig. 2 in the direction of 3-3.

BEST MODE FOR CARRYING OUT THE INVENTION

Terms and Technology

The structure embodying the present invention is nested so deeply in conventional structure that caution must be exercised to avoid confusing descriptive overlap. It has been emphasized that the environment of the present invention is the wall of a nuclear installation containment building. This wall is conventionally comprised of a thick concrete body and a metallic liner on the internal surface of the concrete body.

The present invention, of course, is related to the breaching of the containment building wall. No difficulty evolves in pointing out that there is a hole through the metallic-concrete wall. However, the term "pipe" is reserved for the metallic cylinder which extends through the breached wall and is welded to the metallic liner. The present invention is not concerned with the support or complete seal structure between the penetration pipe and the wall.

The present invention is concerned with the barrier structure placed within the penetration pipe to preserve the integrity of the wall. The principal element of this barrier structure is the sheet/plate/header shown as mounted at the entrance to the penetration pipe on the interior side of the containment building wall. It is pointed out that it is possible to mount the sheet/plate/header at the external end of the penetration pipe on the external side of the containment building wall. At either end of the penetration pipe, a primary seal is maintained between the sheet/plate/header and the containment wall. A second sheet/plate/header, similar to the first, is positioned near the opposite end of the penetration pipe. These two structures are joined by a "cylinder". It is again stated, with perhaps monotonous regularity, that the primary seal between the first sheet/plate/header and the penetration pipe is of utmost importance and is characterized as a primary seal. Nevertheless, this very important seal is not an essential element of the present invention.

The cylinder is weld-sealed to each of its sheets/plates/headers. These seals, again, are of great importance to the integrity of the barrier presented to radioactive material within the containment building. However, again, this structure forms only a part of the environment for the present invention.

Mineral-insulated, metallic-sheathed instrument lines, or cables, are extended through aligned holes in the two sheets/plates/headers. Of course, these instrument cables extend through the cylinder. Therefore, the cylinder provides a conveniently placed pressure chamber with which the integrity of the seals between the instrument cables and their sheets/plates/headers can be tested. The ends of the cables are provided with well-known seal structures to avoid the cables becoming conduits for radioactive material seeking an escape route from the containment building.

C-810810

Now, with the foregoing terms and the technology of the conventional structure roughed into the picture, the present invention can be simply disclosed as embodied in the structure providing an effective, dependable, inexpensive weld or braze seal between the external surface of the metallic sheath of the instrument cables and the wall of the containment building. Of course, for this analysis of the invention, the wall of the containment building is considered to include the first sheet/plate/header mounted at the internal end of the penetration pipe which is, in turn, sealed to the liner of the containment wall. In developing the description of the embodying structure, references to dimensions are sprinkled through the narrative to give an aura of practicality to the structure. In no way do these dimensions narrow the scope of the invention.

Finally, the term "weld or braze" is to be understood within the context of this disclosure. Weld is a generic reference to the structure with which two metallic bodies are joined by intense heat fluidizing the bodies in the areas to be joined. In other words, a relatively deep penetration of the joined bodies is made to intermingle the bodies in their juncture. Both TIG welding and brazing will be subsequently described more elaborately. Brazing, for the purpose of this disclosure, is to be generally included as a sub-species of welding. Brazing technique does not include the depth of penetration produced by welding, but it will be satisfactory in some portions of the embodiment of the present invention. In any event, if the term welding is employed, it is to be understood as including brazing, although the two terms will be generally used together in the disclosure.

The Environment

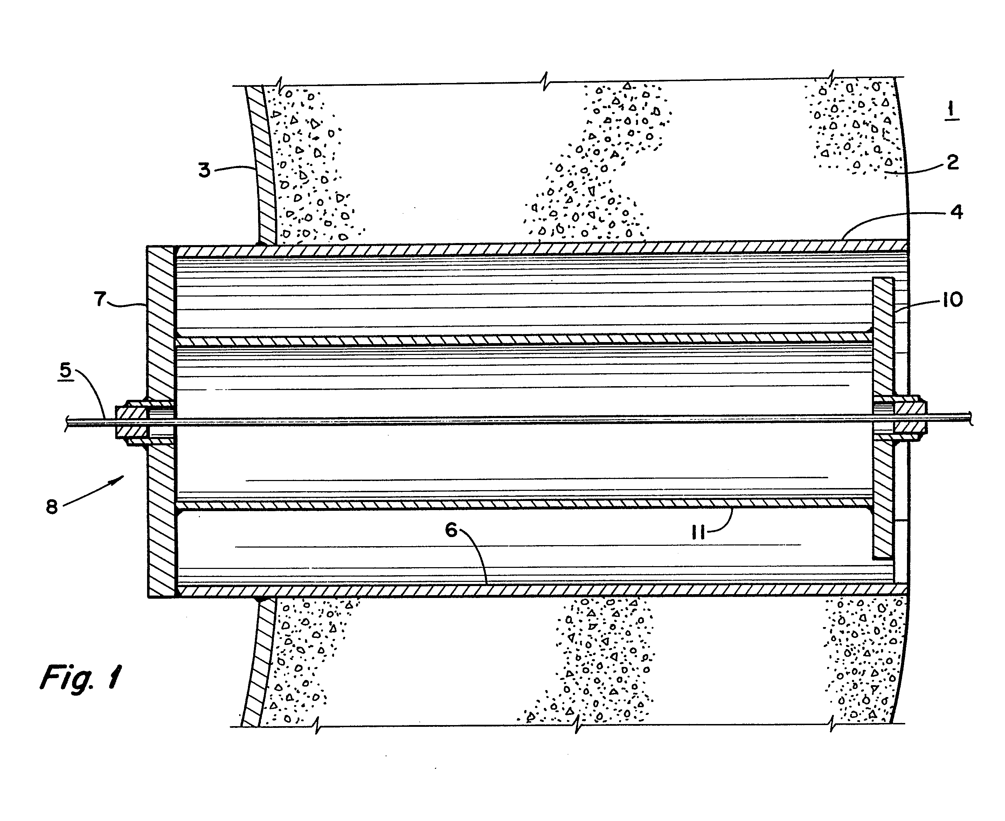

Fig. 1 is offered to provide representation of the structure in which the reduction to practice of the invention is nested. Everything begins with the representation of the wall 1 of the containment building. The fragment of the wall disclosed in cross-section is given enough of a curve to imply the lefthand side of the wall as the interior of the building, as compared with the righthand side as the exterior of the building. More specifically, the wall is shown as having a thick concrete portion 2, with a metallic liner 3 on the internal

C-810810

side of the wall.

The wall is breached by hole 4.  It is through hole 4 that instrument cable 5 extends from its connection to sensing elements, within the building, to manifesting and control structure external to the building.  The single cable 5 disclosed is representative of any plurality of such cables utilizing the present invention.  The present invention seals about cable 5 to prevent any possible escape of radioactive material from the nuclear installation within the containment building.  The environment for the seal structure is focused by penetration pipe 6 extending through the breaching hole and welded to the metallic liner 3.  Again, to give some dimensional perspective, the concrete wall 1 may commonly have a thickness in the order of 4 or 5 feet.  The penetration pipe may have an internal diameter in the order of 18".

Basically, the internal end of penetration pipe 6 is closed by a barrier 7 which carries the term sheet/plate/header. There is no obscuring the fact that this structure is massive, probably having a thickness in the order of at least 1-2". This disc is weld-sealed to join its periphery to the wall of penetration pipe 6 in a primary seal against the escape of radioactive material from the nuclear installation within the containment building.  When installed, the sheet-barrier 7 is to be regarded as a part of the wall 1 through which communication must be provided between the internal and external sides of wall 1.  It will be in this sheet/plate/header 7 that the essential embodiment of the invention will be mounted to satisfactorily seal instrument cable 5 as it extends through the penetration pipe 6.

Fig. 1 does not disclose all the details of the weld-seal structure embodying the invention at 8.  This structure is disclosed in subsequent drawing figures.

The environment for the invention is completed by a second structure 10, similar to barrier structure 7.  This structure 10 is, in form, a duplicate of the first sheet/plate/header 7.  The second sheet/plate/header 10 is mounted parallel to the first barrier but at the exit end of penetration pipe 6.  This sheet/plate/header is not sealed to the penetration pipe.  Rather, the two structures are joined by cylinder 11.  The ends of

C-810810

cylinder 11 are each weld-sealed to the internal faces of the structures. Further, the diameter of cylinder 11 is sized so that all penetrations of the sheets/plates/headers are within the cylinder 11. The result of this arrangement is that cylinder 11, sealed as it is to the structures, forms a conveniently positioned pressure chamber whose gas can become a testing means for the integrity of the seal structure embodying the present invention.

It is pointed out that in Fig. 1, the combination of the sheets/plates/headers and cylinder 11, taken in its entirety, resemble a hollow-handled dumbbell. With the actual reduction to practice using a different metal from that of the penetration pipe, it was deemed engineering prudence to provide sliding contact with the periphery of the second sheet/plate/header structure and the internal walls of the penetration pipe. With this arrangement, the primary seal at the periphery of the first barrier structure would not be stressed by the differential response of the two metals to thermal cycling. Within this setting, the essential elements of the structure embodying the present invention can be competently disclosed in the subsequent drawings.

The Invention

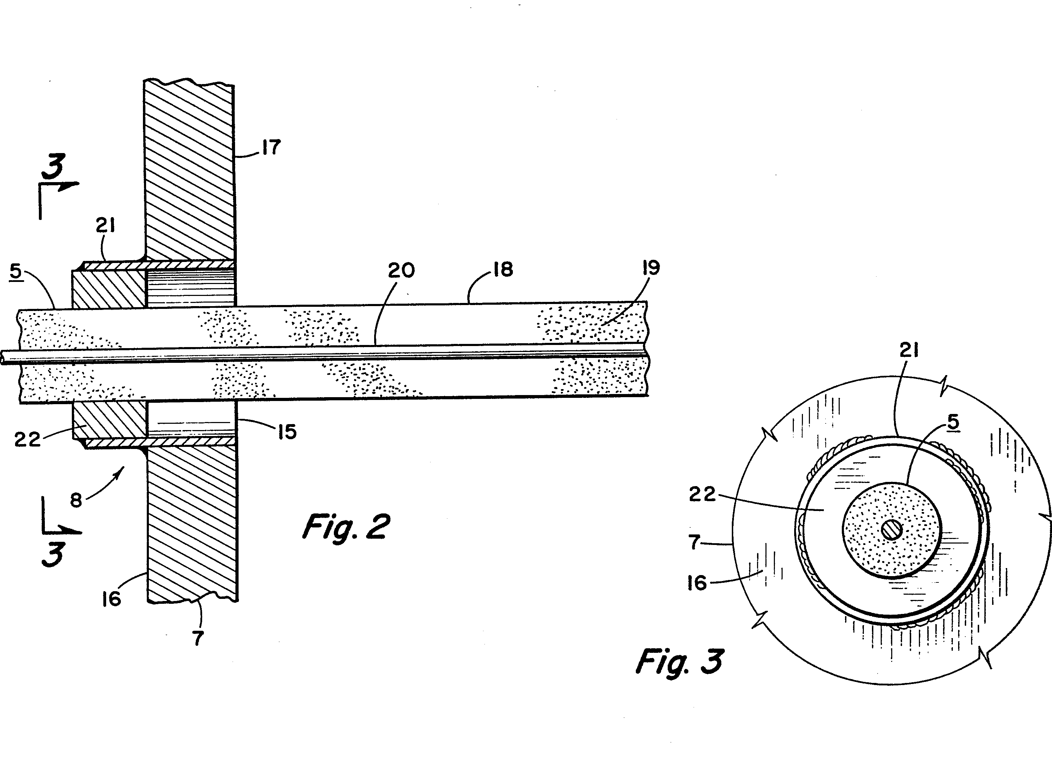

From the perspective provided by Fig. 1, the eye moves readily to the cross-sectioned elevation of the enlarged structure indicated at 8 in Fig. 1. In Fig. 2 the sheet/plate/header 7 is penetrated by hole 15. This hole 15 is bored between face 16 and face 17 with a diameter to receive instrument cable 5 as it connects the sensors of the building interior to the manifesting and control devices exterior of the building.

The cable 5 is shown in cross-section to emphasize the thinness of its metallic sheath 18 within which mineral insulation 19, such as silicon dioxide, is packed about electrical wire 20. At least one actual reduction to practice of the cable is in the order of 1/4" in diameter, having a sheath thickness in the order of 10 to 15 mil. As a tube, sheath 18 is hermetically sealed by conventional structure to prevent the passage of radioactive material through the sheath. This sealing structure of the cable 5 is not shown, not being a part of the present invention.

The problem solved by the present invention is the sealing of the external surface of sheath 18 to the building internal face 16 of the sheet/plate/header 7. The adequate sealing of these two structures provides the required barrier to radioactive material generated within the containment building. The solution of the present problem is far from simple. The conventional form of tube couplings, with their mechanical seals, have been utilized. The mechanical seal was successfully developed, and included an organic elastomer material vulnerable to the environment.

In approaching the problem of sealing the outside of the metallic sheath of the cable, two processes are acceptable. First, brazing is to be understood as bringing an alloy of gold and nickel to a temperature in the order of 1800° F on the surfaces to be joined. At this temperature, the two metal surfaces to be joined will soften to an extent and the brazing material will become liquid. The brazing material will form a union with the metallic surface over which it flows and form a seal.

The weld process is quite different from the brazing process. A seal is conventionally formed with stainless steel melted within a protective shield of inert gas. This TIG welding is carried out at a temperature which fuses metallic surfaces with the stainless steel at a temperature high enough to form a homogenous mass which solidifies into a seal weld of high integrity.

In reducing the present invention to practice, either brazing or welding may be employed. An instrument line disc is first joined to the outside surface of the cable sheath and then joined to an insert within hole 15. First, an insert sleeve 21 is formed and welded in hole 15 from face 16. This sleeve 21 is in the simple form of a cylinder, sized to fit into the hole 15 and provide the required seal. Enough of the external end of the sleeve 21 remains above face 16 to be joined to instrument line disc 22 which is joined to the sheath of the cable.

In form, the instrument line disc 22 is nothing more than a thin washer whose central hole receives the cable 5. With precision, the disc is sealed to the thin sheath of the cable by welding or brazing, obtaining the desired penetration while maintaining the quality control of the combination as a weld or braze-seal. Once installed, the disc 22 can then be welded or brazed to the protruding end of the insert sleeve 21 to complete the weld or braze-seal between the cable 5 and the wall of the containment building.

Fig. 3 is an end elevation of the cable 5 with the disc 22 installed thereon and the disc, in turn, welded or brazed to the insert sleeve 21. The dimensions of the cylindrical sleeve 21 and those of instrument line disc 22 must be carefully controlled. In adapting the invention to a cable in the order of 1/4" in diameter, the cylindrical sleeve 21 will have a diameter which will pass the instrument line disc with a clearance of about ten-thousandths of an inch. The practical procedure is for the manufacturer of the instrument cable to mount the instrument line disc thereon under carefully controlled TIG welding or brazing procedures so that the central hole of the disc may be joined to the thin metallic sheath of the cable in a weld or braze-seal without change to the internal structure of the instrument cable. Subsequently, the cable, with its instrument line disc mounted thereon, can be passed through its hole 15 in sheet/plate/header 7 and the sleeve 21 to be TIG welded or brazed to the sleeve at its end protruding toward the interior of the containment building.

Conclusion

There are times when, for the purposes of clarity, it is well to restate the obvious. The foregoing description of the drawing figures make it evident that the invention enables the metallic sheath of an instrument line, or cable to be weld or braze-sealed to the sheet/plate/header with the same integrity as the seal between the sheet/plate/header and the penetration pipe. In defining this invention, the sheet/plate/header can be regarded as a part of the wall of the containment building, although it is specifically an element weld-sealed to the interior end of the penetration pipe which is, in turn, weld-sealed to the metallic liner of the containment building wall.

The concept of the invention includes the employment of an insert sleeve TIG welded or brazed within a bore of the sheet/plate/header structure to which the instrument line disc can be TIG weld or braze-sealed. All other features of the disclosure are commentary to these essential elements embodying the invention.

From the foregoing, it will be seen that this invention is one well adapted to attain all of the ends and objects hereinabove set forth, together with other advantages which are obvious and inherent to the apparatus.

It will be understood that certain features and subcombinations are of utility and may be employed without reference to other features and subcombinations. This is contemplated by and is within the scope of the invention.

As many possible embodiments may be made of the invention without departing from the scope thereof, it is to be understood that all matter herein set forth or shown in the accompanying drawings is to be interpreted in an illustrative and not in a limiting sense.

C-810810

CLAIMS

1.  A permanent seal structure between the external surface of the metallic sheath of an instrument line cable and the wall of a containment building having a sheet/plate/header with a penetrating bore, characterized by, a cylindrical insert sleeve within the bore and weld-sealed to the bore wall, a metallic sheathed instrument cable extended through the bores of the sheet/plate/header and sleeve, a disc member weld-sealed about the sheath of the instrument cable, and a weld seal joining the periphery of the disc member and the sleeve within the sheet/plate/header bore.

2.  Structure and arrangements for extending an instrument cable through the wall of a nuclear installation, including, a wall of a nuclear installation containment building comprising a concrete body and internal metallic liner, a first hole breaching the wall to provide access for a cable extending from inside the building to an external station, a penetration pipe extending through the wall-breaching hole and weld-sealed to the liner of the wall, a first sheet/plate/header sealed to the internal opening of the penetration pipe to form a portion of the wall, a second hole extended through the sheet/plate/header to accommodate the passage of an instrument cable, an insert sleeve mounted within the second hole and weld-sealed to the sheet/plate/header, characterized by, a cable having an external metallic sheath extending through the second hole and sleeve to establish communication between the interior and exterior of the containment building, a round instrument line disc with a central aperture positioned about the sheath of the cable and weld-sealed to the external surface of the sheath, without change to the cable internal structure, and a weld-seal about the perphery of the disc to connect the disc to the cylindrical sleeve of the second hole.

3.  The structure and arrangement of Claim 2, including, a second sheet/plate/header positioned parallel to the first sheet/plate/header and at the external end of the penetration pipe, a third hole extending through the second sheet/plate/header aligned with the second hole through the first sheet/plate/header to accommodate the extension of the instrument cable between the interior and exterior of the containment building, characterized by, a cylinder connected between the two sheets/plates/headers over the aligned holes to provide a pressure chamber through which the instrument cable extends and to provide a means of continuously monitoring leak tightness of the cable seals, and means about the instrument cable with which to weld-seal the sheath of the cable to the third hole through the second sheet/plate/header.

C810810

Fig. 1

*Fig. 2*

*Fig. 3*

0096205

European Patent
Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | CH-A- 439 505 (C.E.A.)<br>* Column 2, lines 4-37; figures * | 1,2 | G 21 C 17/10<br>H 01 B 17/30 |
| A | US-A-4 235 674 (YUE)<br>* Column 2, lines 9-61; figures 1,2 * | 1,3 | |
| A | US-A-3 418 423 (R.L. BRONNES et al.)<br>* Column 2, lines 4-11; figures * | 1 | |
| A | US-A-3 920 888 (BARR)<br>* Whole document * | 1,2 | |
| A | FR-A-2 219 552 (EURATOM) | | |

| TECHNICAL FIELDS SEARCHED (Int. Cl. ³) |
|---|
| G 21 C 17/00<br>H 01 B 17/30<br>G 21 C 13/02 |

The present search report has been drawn up for all claims

| Place of search | Date of completion of the search | Examiner |
|---|---|---|
| THE HAGUE | 30-08-1983 | GIANNI G.L.G. |